# DEMANDE DE BREVET EUROPEEN

(11) **EP 1 176 409 A1**
(43) Date de publication de la demande: **30.01.2002**
(21) Numéro de dépôt: 01401863.4
(22) Date de dépôt: 11.07.2001
(51) Int. Cl.: G01L 5/16, G01L 5/00

(54) **Roulement comprenant au moins une zone de déformation elastique et ensemble de freinage le comprenant**

(30) Priorité: 28.07.2000 FR 0009991
(71) Demandeur: SNR ROULEMENTS, F-74010 Annecy (FR)
(72) Inventeur: Salou, Arnaud, 74000 Annecy (FR); Nicot, Christophe, 74330 Epagny (FR); Blanchin, Olivier, 74000 Annecy (FR)
(74) Mandataire: Geismar, Thierry

(57) **Abrégé**

Roulement du type comprenant une bague fixe (2) destinée à être associée à une structure fixe, une bague tournante (3) destinée à être associée à un organe tournant (6, 8, 9) et des corps roulants disposés entre elles, dans lequel la bague fixe (2) comprend des premiers moyens de fixation (5) dudit roulement (1) à la structure fixe. La bague fixe (2) comprend au moins une zone de déformation élastique apte à être déformée sous l'action d'efforts exercés sur ledit roulement (1). Au moins un capteur (26) apte à mesurer les dits efforts est associé fonctionnellement à ladite zone de déformation élastique.

## Description

L'invention concerne un roulement, un ensemble de freinage comprenant un tel roulement, ainsi qu'une application de ces ensembles à la mesure du couple et des forces appliquées à une ou chacune des roues d'un véhicule et à la régulation d'au moins une commande du véhicule.

On connaît déjà des roulements du type comprenant une bague fixe destinée à être associée à une structure fixe, une bague tournante destinée à être associée à un organe tournant, et des corps roulants disposés entre elles, dans lequel la bague fixe comprend des moyens de fixation du roulement à une structure fixe.

Lorsque l'on souhaite connaître des efforts appliqués par la structure fixe à l'organe tournant, il est connu de disposer au niveau de la liaison entre la bague fixe et la structure fixe des pièces rapportées formant unités de mesure.

Le document EP-A-0 432 122 illustre cette technologie, en prévoyant une unité de mesure fixée rigidement à la bague fixe, cette unité de mesure comprenant un support annulaire et une pluralité de capteurs associés au support selon des orientations prédéterminées par rapport à l'axe de rotation.

Ce type de technologie présente un certain nombre d'inconvénients.

En effet, la présence et la multiplicité des unités de mesure rapportées rend le montage du roulement délicat et complexe.

La bague fixe, en emprisonnant les unités de mesure lors du montage du roulement, les soumet à une précontrainte nuisible aux mesures ultérieures des efforts.

Par ailleurs, lorsque l'on souhaite connaître également le couple de freinage appliqué à une roue par l'intermédiaire d'un étrier de frein, ce type de technologie n'est pas envisageable.

L'invention vise donc à remédier à ces inconvénients en proposant un roulement qui comprend de façon intégrée des zones de déformation instrumentées par des capteurs, et qui permette de mesurer à la fois les efforts issus du comportement statique et dynamique du véhicule ainsi que le couple de freinage exercés sur une roue du véhicule.

A cet effet, et selon un premier aspect, l'invention propose un roulement du type comprenant une bague fixe destinée à être associée à une structure fixe, une bague tournante destinée à être associée à un organe tournant et des corps roulants disposés entre elles, dans lequel la bague fixe comprend des premiers moyens de fixation dudit roulement à la structure fixe, la bague fixe comprenant au moins une zone de déformation élastique apte à être déformée sous l'action d'efforts exercés sur ledit roulement, au moins un capteur apte à mesurer les dits efforts étant associé fonctionnellement à ladite zone de déformation élastique.

Ce roulement peut en outre comprendre des deuxièmes moyens de fixation d'un dispositif destiné à appliquer un effort sur l'organe tournant associé à la bague tournante.

La zone de déformation élastique est localisée par exemple au voisinage des premiers et/ou des deuxièmes moyens de fixation.

Selon un mode de réalisation, le ou les capteurs localisés au voisinage des premiers moyens de fixation sont agencés pour mesurer les forces appliquées aux premiers moyens de fixation, ainsi que leurs moments respectifs, selon trois directions orthogonales formant ensemble un trièdre.

Le ou les capteurs localisés au voisinage des deuxièmes moyens de fixation peuvent être quant à eux agencés pour mesurer les forces appliquées aux deuxièmes moyens de fixation, ainsi que leurs moments respectifs, selon trois directions orthogonales formant ensemble un trièdre.

Selon un mode de réalisation, le roulement comprend une bride formant les premiers moyens de fixation, cette bride saillant radialement de la bague fixe, et comprenant deux faces planes s'étendant radialement et reliées entre elles par une face circonférentielle.

Cette bride comprend par exemple des premières saillies radiales dans lesquelles sont pratiqués des trous axiaux pour la fixation du roulement par vissage sur la structure fixe, deux saillies adjacentes étant séparées par une zone de moindre dimension axiale et/ou radiale formant zone de déformation élastique, sur laquelle sont disposés le ou les capteurs.

Par exemple, la bride comprend quatre premières saillies disposées sensiblement à 90° les unes par rapport aux autres, définissant entre elles quatre zones de déformation élastique sur chacune desquelles est disposé au moins un capteur.

Par ailleurs, la bride peut comprendre des deuxièmes saillies radiales formant deuxièmes moyens de fixation au roulement d'un dispositif destiné à appliquer un effort sur l'organe tournant associé à la bague tournante, les saillies comprenant une zone de base et une zone d'extrémité.

Ces deuxièmes saillies comprennent par exemple des trous axiaux pour la fixation par vissage du dit dispositif, localisés dans la zone d'extrémité, au moins un capteur étant disposé sur ou au voisinage de la zone de base, celle-ci formant zone de déformation élastique.

Selon un mode de réalisation, deux capteurs sont disposés sur la face circonférentielle, de part et d'autre de chaque deuxième saillie et/ou au moins un capteur est disposé sur les faces transversales de la bride.

De préférence, une dimension radiale des deuxièmes saillies est supérieure à une dimension radiale des premières saillies.

Selon un mode de réalisation, la bride comprend
- quatre premières saillies disposées sensiblement à 90° les unes par rapport aux autres, définissant entre elles trois zones de déformation élastique sur chacune desquelles est disposé au moins un capteur ; et
- deux deuxièmes saillies localisées entre deux premières saillies adjacentes, chaque deuxième saillie étant pourvue d'au moins un capteur.

En variante, des ajours sont pratiqués dans les premières et/ou les deuxièmes saillies, des capteurs étant disposés sur les faces internes des ajours.

Selon un mode de réalisation, au moins un capteur est disposé sur, ou comprend, une pièce intermédiaire fixée sur une zone de déformation élastique par encastrement, soudage, collage, ou analogue.

Selon un deuxième aspect, l'invention propose un ensemble de freinage comprenant un roulement tel que décrit ci-dessus, et un étrier de frein associé à lui par l'intermédiaire des deuxièmes moyens de fixation, l'étrier étant dissocié de la structure fixe.

Selon un mode de réalisation, cet ensemble comprend en outre un disque de frein associé à la bague tournante, inséré entre les mors de l'étrier pour que celui-ci lui applique un effort de freinage par rapprochement des mors.

Selon un troisième aspect, l'invention propose une application de ces ensembles à la mesure d'une part du couple de freinage d'un véhicule et d'autre part des efforts longitudinaux, transversaux et verticaux exercés sur une ou chacune de ses roues, dans laquelle un ensemble est associé à une ou à chacune des roues du véhicule, le couple étant mesuré au moyen des capteurs localisés au voisinage des deuxièmes moyens de fixation et les efforts étant mesurés au moyen des capteurs localisés au voisinage des premiers moyens de fixation.

Selon un mode de réalisation, dans laquelle un dispositif de commande recueille les mesures du couple de freinage et/ou des efforts exercés sur une ou chacune des roues, ce dispositif étant agencé pour réguler au moins une commande de contrôle dynamique du véhicule, notamment le freinage, l'accélération, la direction, la suspension en fonction des dites mesures.

D'autres objets et avantages de l'invention apparaîtront au cours de la description qui suit, faite en référence aux dessins annexés, dans lesquels :

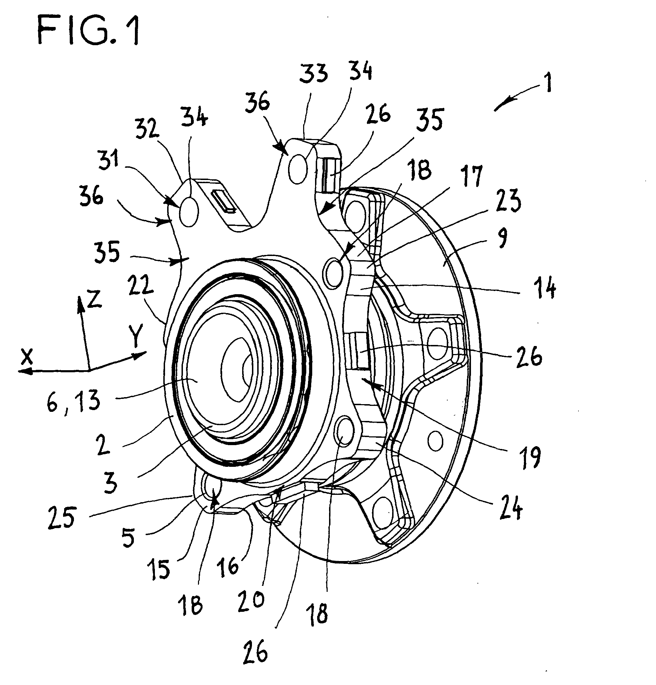

- la figure 1 est une vue en perspective d'un roulement comprenant une bague extérieure fixe, une bague intérieure tournante emmanchée sur un moyeu de roue, où la bague fixe comprend des premiers moyens de fixation du roulement à une structure fixe ; selon le mode de réalisation illustré, la bague fixe comprend plusieurs zones de déformation élastique aptes à être déformée sous l'action d'efforts exercés sur le roulement, et des capteurs aptes à mesurer ces efforts sont associés à ces zones de déformation ; le moyeu comprenant un flasque sur lequel un disque de frein d'un véhicule automobile est destiné à être associé ;
- la figure 2 est une vue en perspective du roulement représenté sur la figure 1, selon un autre angle de vue ;
- la figure 3 est une vue en perspective d'un roulement analogue à celui des figures précédentes, dans lequel des ajours sont formés au voisinage des deuxièmes moyens de fixation de sorte à augmenter l'amplitude des déformations élastiques engendrées par les efforts ;
- la figure 4 est une vue en perspective d'un ensemble de freinage comprenant un roulement tel que celui des figures 1 et 2, un étrier de frein associé à la bague fixe et un disque de frein associé à la bague tournante ;
- la figure 5 est une vue en perspective de l'ensemble de freinage de la figure 4, selon un autre angle de vue ;
- la figure 6 est une vue en plan de dessus d'un capteur dont est pourvu le roulement des figures précédentes, selon un mode de réalisation où il comprend sur sa face supérieure quatre jauges de contraintes extensométriques montées en pont qui sont collées sur un substrat, permettant de mesurer les déformations de flexion et de torsion subies par le substrat ;
- la figure 7 est une vue de côté du capteur de la figure 6, qui comprend sur sa face latérale deux capteurs extensométriques permettant de mesurer d'autres déformations de flexion subies par le substrat ; et
- la figure 8 est un schéma illustrant une application de l'ensemble des figures 4 et 5 à la mesure du couple de freinage du véhicule ; sur cette figure, un dispositif de commande recueille les mesures du couple de freinage et/ou des efforts exercés sur les roues ; ce dispositif est relié à quatre unités de commande du véhicule pour réguler le freinage, l'accélération, la direction, la suspension en fonction des mesures recueillies.

Sur les figures 1 à 5 est représenté un roulement 1 qui comprend une bague extérieure fixe 2 et une bague intérieure tournante 3, et des corps roulants entre elles (non représentés sur les figures).

La bague fixe 2 est destinée à être associée à une structure fixe telle que le châssis d'un véhicule 4 par l'intermédiaire de premiers moyens de fixation 5, tandis que la bague tournante 3 est destinée à être associé à un organe tournant 6.

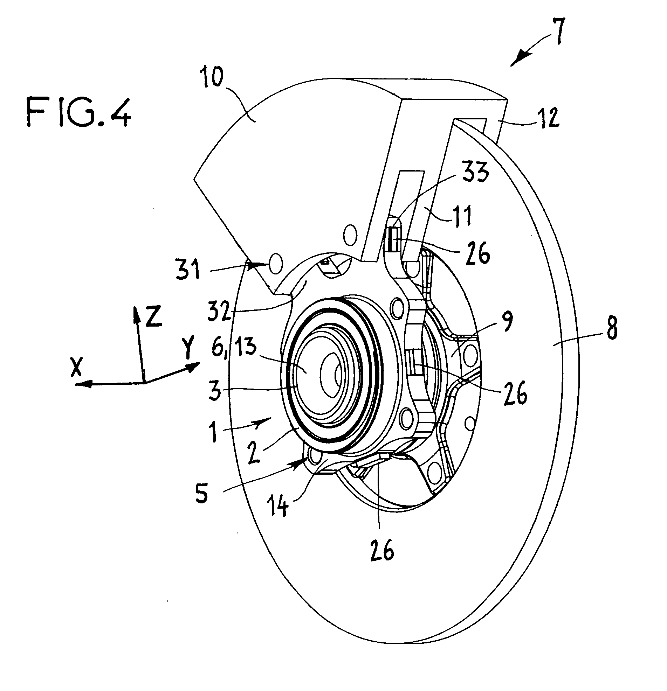

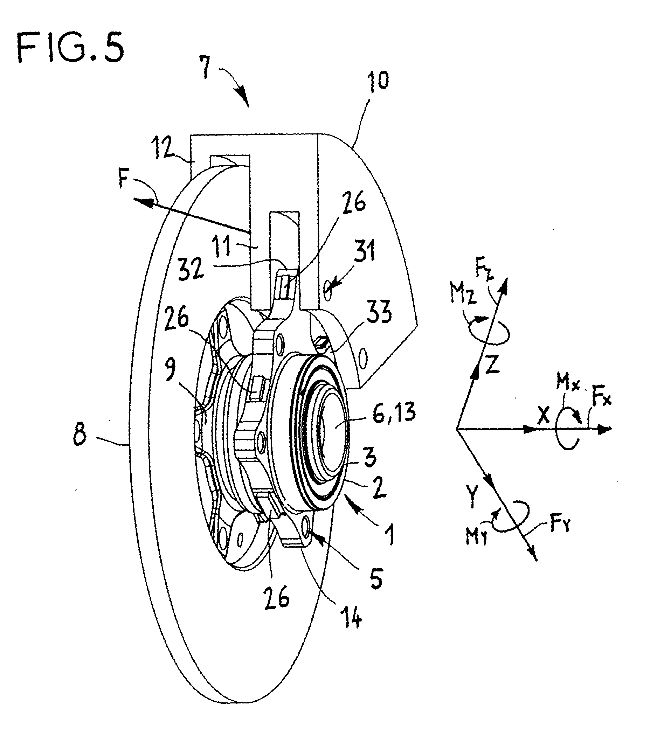

Dans une application illustrée sur les figures 4 et 5, le roulement 1 est intégré à un ensemble de freinage 7 qui comprend un disque de frein 8 monté sur un flasque 9 du moyeu 13, et un étrier 10 comportant deux mors 11, 12 disposés de part et d'autre du disque 8 pour exercer sur lui une force de freinage F par pincement du disque 8 lors du rapprochement des mors 11,12.

Dans une première variante représentée sur les figures, la bague tournante 3 est emmanchée sur le moyeu 13 qui s'étend de façon coaxiale au disque 8, le disque 8 et le moyeu 13 faisant partie de l'organe tournant 6 mentionné ci-dessus.

Dans une deuxième variante (non représentée), le moyeu 13 comprend au moins une piste de roulement des corps roulants de sorte à faire partie de la bague tournante 3. Dans cette variante, le moyeu 13 est par exemple serti sur la bague fixe 2 et l'organe tournant 6 comprend le disque 8 monté sur le flasque 9.

Trois directions arbitraires représentées sur les figures 1 à 5 sont définies en relation avec l'ensemble de freinage 7 pour faciliter la présente description : une direction X axiale, dite longitudinale, confondue avec l'axe du roulement 1, l'axe du disque 8 et l'axe du moyeu 13 ; et deux directions radiales perpendiculaires à la direction axiale et perpendiculaires entre elles: une direction Y dite transversale et une direction Z dite d'élévation, de sorte que les trois directions X, Y, Z forment dans l'espace un trièdre direct.

L'on suppose pour plus de commodité que, dans le cas de l'ensemble de freinage 7, la direction d'élévation Z est perpendiculaire au sol, tandis que les directions longitudinale X et transversale Y sont parallèles au sol.

Une localisation à proximité de l'axe du roulement 1 est dite intérieure, tandis qu'une localisation à distance de l'axe est dite extérieure.

Des efforts sont appliqués par la structure fixe sur les premiers moyens de fixation 5 ou réciproquement, notamment lors des mouvements (tangage, roulis, lacet) du châssis du véhicule 4 par rapport à ses trains roulants, dus à l'accélération, aux virages, aux mouvements de suspension, au freinage.

Ces efforts se traduisent par des forces selon les trois directions X, Y, Z, et des moments autour d'axes parallèles à ces trois directions.

L'on souhaite mesurer au moins une partie de ces efforts.

Pour assurer la fixation du roulement 1 à la structure fixe, la bague fixe 2 comprend une bride 14 venue de matière, étendue radialement sur au moins une partie de la circonférence du roulement 1.

Cette bride 14 présente deux faces 15, 16 qui s'étendent radialement selon un plan d'élévation transversale, reliées par une face circonférentielle 17, et est percée de trous traversants 18 pour la fixation de la bague fixe 2 à la structure fixe par vissage.

Etant associé d'une part à la structure fixe par sa bague fixe 2, et d'autre part à l'organe tournant 6 par sa bague tournante 3, le roulement 1 subit et transmet les efforts au moins en partie, et constitue de ce fait un lieu privilégié de mesure.

A cet effet, la bride 14 présente au moins une zone de déformation élastique 19, 20, 21 déformable sous l'action d'efforts exercés sur le roulement.

Le matériau dans lequel est réalisé le roulement 1 - notamment la bague fixe 2 -, ainsi que la forme des zones de déformation 19, 20, 21, sont choisis pour que les déformations ne dépassent pas la limite élastique du matériau.

Selon un mode de réalisation, le matériau dans lequel est réalisé le roulement est un acier classiquement utilisé dans le domaine des roulements.

Par ailleurs, selon un mode de réalisation illustré sur les figures 1 à 5, la bride 14 comprend quatre premières saillies radiales 22, 23, 24, 25 dans lesquelles sont prévus les trous 18, et formant les premiers moyens de fixation 5 mentionnés ci-dessus.

Selon un autre mode de réalisation (non représenté), la bride 14 comprend trois premières saillies radiales dans lesquelles sont prévus des trous qui sont disposés à sensiblement 120° les uns des autres.

Le montage du roulement 1 sur le châssis se fait au moyen de vis qui peuvent soit se visser dans le porte-fusée en traversant les trous 18 soit se visser dans les trous 18 en traversant le porte-fusée.

La bride 14 présente une épaisseur (c'est-à-dire la distance séparant ses deux faces 15, 16, ou la dimension transversale de sa face circonférentielle) suffisante pour à la fois assurer une fixation rigide du roulement 1 à la structure fixe et permettre une déformation de la bague fixe 2 sous l'effet des efforts subis.

Selon un mode de réalisation illustré sur les figures 1 à 5, la bride comprend des zones en creux 19, 20, 21, dont les dimensions radiales et/ou axiales sont inférieures aux dimensions radiales, respectivement axiales des premières saillies 22, 23, 24, 25.

Selon un mode de réalisation, les premières saillies radiales sont disposées à 90° les unes par rapport aux autres, de même que les zones en creux 19, 20, 21, celles-ci étant intercalées entre les premières saillies 22, 23, 24, 25.

Ces zones en creux, qui visent à faciliter les déformations locales de la bride 14, forment les zones de déformation 19, 20, 21 mentionnées ci-dessus.

Afin de permettre la mesure de ces déformations, et par conséquent des efforts subis par le roulement 1, au moins un capteur 26 est associé fonctionnellement à au moins une, et par exemple à chaque zone de déformation élastique 19, 20, 21.

Par exemple, chaque capteur 26 peut être élaboré à partir d'éléments choisis parmi:
- les jauges de contraintes à base d'éléments piézorésistifs ;
- les capteurs d'ondes acoustiques de surface ;
- les capteurs de champ magnétique, par exemple basés sur des éléments sensibles de type magnétorésistance, magnétorésistance géante, effet Hall, magnétorésistance à effet tunnel.

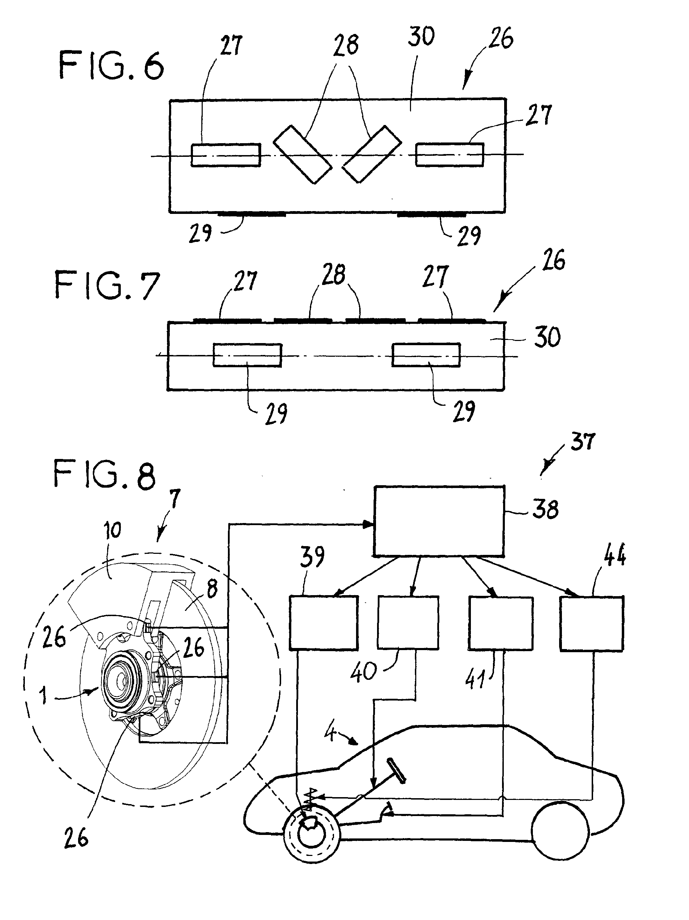

Selon un mode de réalisation illustré sur les figures 6 et 7, qui illustrent un capteur 26 en gros plan, celui-ci est élaboré à partir de jauges de contrainte extensométriques 27, 28, 29 dont la valeur ohmique varie linéairement en fonction de l'élongation.

Le capteur 26 comprend par exemple un substrat diélectrique formant une plaquette 30 sur laquelle les jauges 27, 28, 29 sont collées ou formées par sérigraphie ou procédé équivalent.

Par exemple, deux jauges de flexion 27 et deux jauges de torsion 28 sont disposées sur une même face supérieure de la plaquette, tandis que deux jauges de flexion 29 sont disposées sur une même face latérale de la plaquette 30.

Ces jauges de contraintes sont parcourues par un courant et insérées par exemple dans un circuit à pont de Wheatstone sous basse tension, et permettant de mesurer la valeur ohmique de chacune des jauges de contrainte.

On peut en déduire les déformations subies par la plaquette 30 en torsion d'une part, et en flexion selon deux directions perpendiculaires d'autre part.

La plaquette 30 étant rigidement fixée à la bride sur une zone de déformation 19, 20, 21, par exemple par collage ou soudage, il est possible d'en déduire les déformations de la zone de déformation 19, 20, 21, et par conséquent les contraintes qu'elle subit.

Les capteurs 26 peuvent être disposés sur les faces transversales 15, 16 de la bride 14 et/ou sur sa face circonférentielle 17 au voisinage ou sur une zone de déformation 19, 20, 21, les premières saillies 22, 23, 24, 25 étant rigidement fixées à la structure fixe.

En outre, la bride 14 comprend, selon un mode de réalisation illustré sur les figures 1 à 5, des deuxièmes moyens de fixation 31 de l'étrier de frein à la bride 14.

Selon des variantes de réalisation, non représentées, ces deuxièmes moyens de fixation 31 associent un autre type de dispositif destiné à appliquer un effort sur l'organe tournant 6.

Selon un mode de réalisation, la bride 14 comprend au moins une, et par exemple deux deuxièmes saillies radiales 32, 33 comprenant des trous traversants 34 pour la fixation de l'étrier 10 par vissage, et formant les deuxièmes moyens de fixation 31.

Les deuxièmes saillies 32, 33 comprennent, depuis l'intérieur vers l'extérieur, une zone de base 35 et une zone d'extrémité 36 dans laquelle sont pratiqués les trous 34.

Selon un mode de réalisation illustré sur les figures 1 à 5, les deux deuxièmes saillies 32, 33 sont interposées entre deux premières saillies 22, 23 consécutives, de sorte que la bride 14 présente un plan de symétrie d'élévation longitudinale, et la dimension radiale des deuxièmes saillies 32, 33 est supérieure à la dimension radiale des premières saillies 22, 23, 24, 25.

Selon ce mode de réalisation, les premières 22-25 et deuxièmes 32, 33 saillies sont disposées dans un même plan, mais elles peuvent également être disposées dans deux plans coplanaires ou non.

Les deuxièmes saillies 32, 33 formant l'unique support de l'étrier de frein 10, celui-ci étant dissocié du châssis du véhicule, l'ensemble des forces et du couple de freinage appliqué par ce dernier au disque est transmis au roulement 1 par l'intermédiaire des deuxièmes saillies 32, 33.

L'on souhaite mesurer ces forces, leur moments selon les trois directions X, Y, Z, de sorte à en déduire notamment le couple de freinage.

A cet effet, les deuxièmes saillies 32, 33 comprennent chacune au moins une zone de déformation élastique sur laquelle - ou au voisinage de laquelle - est disposé un capteur 26 tel que décrit plus haut, apte à mesurer la déformation qu'elle subit lors du freinage, selon les trois directions X, Y, Z.

Cette zone de déformation élastique est par exemple confondue avec la zone de base 35 de la deuxième saillie 32, 33.

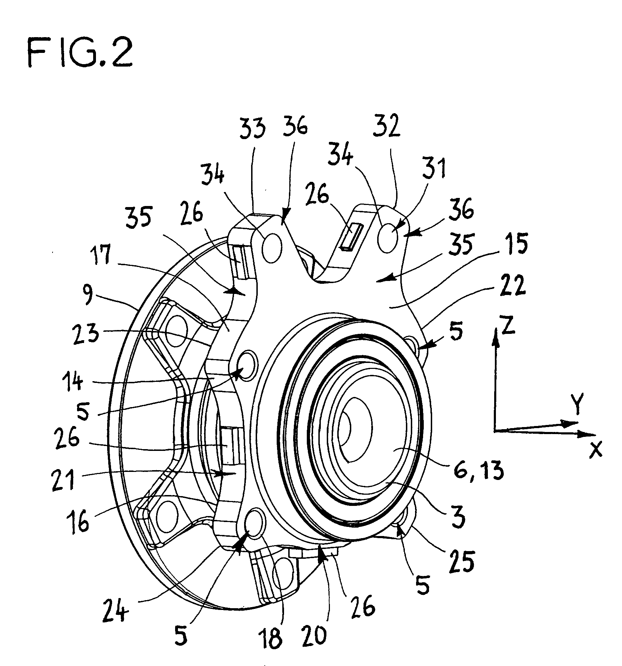

Selon un mode de réalisation, illustré notamment sur les figures 1 et 2, deux capteurs 26 sont disposés sur la face circonférentielle 17 de la bride 14, de part et d'autre et à la base de chaque deuxième saillie 32, 33.

Un capteur 26 peut être disposé à la base de chaque saillie 32, 33, sur l'une des faces 15, 16 transversales de la bride 14, ou sur chacune d'elle.

Afin d'améliorer la précision des mesures, il est possible de combiner la disposition des capteurs 26 sur la face circonférentielle 17 et sur les faces transversales 15, 16 de la bride 14.

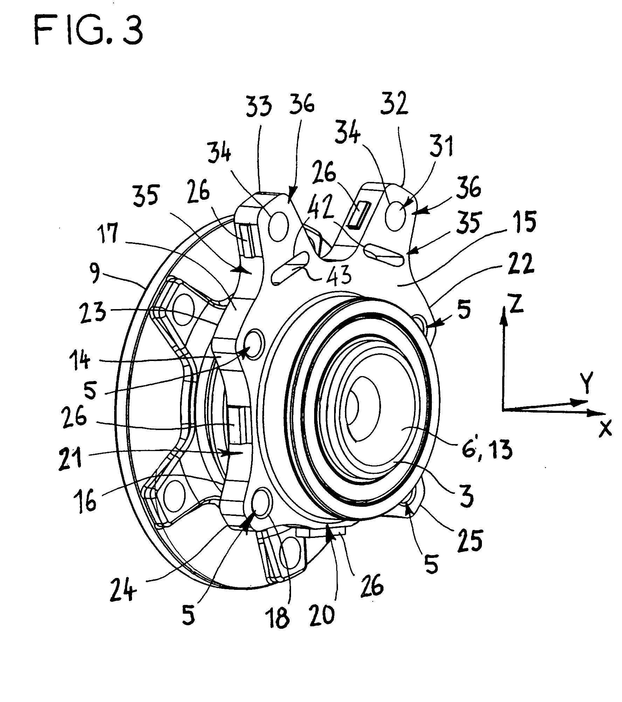

En variante, représentée sur la figure 3, un ajour 42 est pratiqué dans chaque partie de base 35 des deuxièmes saillies 32, 33. Ces ajours 42 sont formés par un trou oblong traversant et ont pour fonction d'augmenter l'amplitude des déformations élastiques engendrées par les efforts de sorte à améliorer les mesures.

En complément, au moins un capteur 26 peut être disposé sur une face interne 43 de l'ajour 42 de sorte à former zone de déformation instrumentée.

Selon un mode de réalisation, illustré sur la figure 8, les informations issues de la mesure par les capteurs 26 des déformations de la bride 14, d'une part au voisinage des premiers moyens de fixation 5 de la bague fixe 2 à la structure fixe, d'autre part au voisinage des deuxièmes moyens de fixation 31 de l'étrier de frein à la bague fixe 2, sont recueillies par un dispositif de commande 37.

Ce dispositif de commande comprend par exemple un calculateur 38 relié aux capteurs 26, qui calcule les contraintes subies par la bride au niveau des capteurs, en déduit les résultantes Fx, Fy, Fz des forces subies par le roulement 1, respectivement selon les directions X, Y, Z ainsi que leurs moments Mx, My, Mz selon ces directions.

De la sorte, le calculateur 38 calcule notamment le couple de freinage appliqué par l'étrier 10 au disque 8.

En variante, un roulement 1 est associé à chaque roue du véhicule de sorte que le calculateur 38 permette la mesure du couple de freinage et/ou des efforts subis sur chaque roue.

Selon un mode de réalisation, illustré sur la figure 8, le dispositif de commande 37 comprend en outre quatre servomoteurs 39, 40, 41, 44 reliés d'une part au calculateur 38, et d'autre part respectivement au système de freinage, au système de direction, au système d'accélération, à la suspension du véhicule 4, pour réguler respectivement le freinage, la direction, l'accélération, la suspension de celui-ci en fonction des valeurs des forces Fx, Fy, Fz, des moments Mx, My, Mz calculés par le calculateur.

En variante, le roulement 1 peut être instrumenté par un codeur magnétique associé à la bague tournante 3 ou formant joint d'étanchéité et un capteur associé à la bague fixe 2 de sorte à mesurer la vitesse de rotation de l'organe tournant.

Dans cette variante, la vitesse de rotation peut être implémentée dans le dispositif de commande 37 de sorte à pouvoir être utilisée lors de la régulation des commandes du véhicule 4.

## Revendications

1. Roulement du type comprenant une bague fixe (2) destinée à être associée à une structure fixe, une bague tournante (3) destinée à être associée à un organe tournant (6, 8, 9) et des corps roulants disposés entre elles, dans lequel la bague fixe (2) comprend des premiers moyens de fixation (5) dudit roulement (1) à la structure fixe, **caractérisé en ce que** la bague fixe (2) comprend au moins une zone de déformation élastique (19, 20, 21, 35) apte à être déformée sous l'action d'efforts exercés sur ledit roulement (1) et **en ce qu'**au moins un capteur (26) apte à mesurer les dits efforts est associé fonctionnellement à ladite zone de déformation élastique (19, 20, 21, 35).

2. Roulement selon la revendication 1, **caractérisé en ce qu'**il comprend en outre des deuxièmes moyens de fixation (31) d'un dispositif (10) destiné à appliquer un effort sur l'organe tournant (6, 8, 9) associé à la bague tournante (3).

3. Roulement selon la revendication 1 ou 2, **caractérisé en ce que** la zone de déformation élastique (19, 20, 21, 35) est localisée au voisinage des premiers et/ou des deuxièmes moyens de fixation (5, 31).

4. Roulement selon la revendication 3, **caractérisé en ce que** le ou les capteurs (26) localisés au voisinage des premiers moyens de fixation (5) sont agencés pour mesurer les forces appliquées aux premiers moyens de fixation (5), ainsi que leurs moments respectifs, selon trois directions orthogonales formant ensemble un trièdre.

5. Roulement selon la revendication 3 ou 4, **caractérisé en ce que** le ou les capteurs (26) localisés au voisinage des deuxièmes moyens de fixation (31) sont agencés pour mesurer les forces appliquées aux deuxièmes moyens de fixation (31), ainsi que leurs moments respectifs, selon trois directions orthogonales formant ensemble un trièdre.

6. Roulement selon l'une des revendications 1 à 5, **caractérisé en ce qu'**il comprend une bride (14) formant les premiers moyens de fixation (5), la dite bride (14) saillant radialement de la bague fixe (2), et comprenant deux faces planes (15, 16) s'étendant radialement et reliées entre elles par une face circonférentielle (17).

7. Roulement selon la revendication 6, **caractérisé en ce que** la dite bride (14) comprend des premières saillies radiales (22, 23, 24, 25) dans lesquelles sont pratiqués des trous axiaux (18) pour la fixation du roulement (1) par vissage sur la structure fixe, deux saillies adjacentes étant séparées par une zone de moindre dimension axiale et/ou radiale formant zone de déformation élastique (19, 20, 21), sur laquelle sont disposés le ou les capteurs (26).

8. Roulement selon la revendication 7, **caractérisé en ce que** la dite bride (14) comprend quatre premières saillies (22, 23, 24, 25) disposées sensiblement à 90° les unes par rapport aux autres, définissant entre elles quatre zones de déformation élastique (19, 20, 21) sur chacune desquelles est disposé au moins un capteur (26).

9. Roulement selon l'une des revendications 7 ou 8, **caractérisé en ce que** la bride (14) comprend des deuxièmes saillies radiales (32, 33) formant deuxièmes moyens de fixation (31) au roulement d'un dispositif (10) destiné à appliquer un effort sur l'organe tournant (6, 8, 9) associé à la bague tournante (3), les saillies (32, 33) comprenant une zone de base (35) et une zone d'extrémité (36).

10. Roulement selon la revendication 9, **caractérisé en ce que** les dites deuxièmes saillies (32, 33) comprennent des trous axiaux (34) pour la fixation par vissage du dit dispositif (10), localisés dans la zone d'extrémité (36), au moins un capteur (26) étant disposé sur ou au voisinage de la zone de base (35), celle-ci formant zone de déformation élastique.

11. Roulement selon la revendication 9 ou 10, **caractérisé en ce que** deux capteurs (26) sont disposés sur la face circonférentielle (17) de la bride (14), de part et d'autre de chaque deuxième saillie (32, 33).

12. Roulement selon l'une quelconque des revendications 6 à 11, **caractérisé en ce qu'**au moins un capteur (26) est disposé sur les faces transversales (15, 16) de la bride (14).

13. Roulement selon l'une des revendications 9 à 12, **caractérisé en ce qu'**une dimension radiale des deuxièmes saillies (32, 33) est supérieure à une dimension radiale des premières saillies (22, 23, 24, 25).

14. Roulement selon l'une des revendications 9 à 13, **caractérisé en ce que** la bride (14) comprend :
- quatre premières saillies (22, 23, 24, 25) disposées sensiblement à 90° les unes par rapport aux autres, définissant entre elles trois zones de déformation élastique (19, 20, 21) sur chacune desquelles est disposé au moins un capteur (26) ; et
- deux deuxièmes saillies (32, 33) localisées entre deux premières saillies (22, 23) adjacentes, chaque deuxième saillie (32, 33) étant pourvue d'au moins un capteur (26).

15. Roulement selon l'une des revendications 9 à 14, **caractérisé en ce que** des ajours (42) sont pratiqués dans les premières (22-25) et/ou les deuxièmes (32, 33) saillies, des capteurs (26) étant disposés sur les faces internes (43) des ajours (42).

16. Roulement selon l'une des revendications 1 à 15, **caractérisé en ce que** les capteurs (26) sont ou comprennent des jauges de contraintes (27, 28, 29) à base d'éléments piézorésistifs.

17. Roulement selon l'une des revendications 1 à 15, **caractérisé en ce que** les capteurs (26) sont ou comprennent des capteurs d'ondes acoustiques de surface.

18. Roulement selon la revendication 1 à 15, **caractérisé en ce que** les capteurs (26) sont ou comprennent des capteurs de champ magnétique.

19. Roulement selon l'une des revendications 1 à 18, **caractérisé en ce qu'**au moins un capteur (26) est disposé sur, ou comprend, une pièce intermédiaire (30) fixée sur une zone de déformation élastique par encastrement, soudage, collage, ou analogue.

20. Ensemble de freinage comprenant un roulement selon l'une quelconque des revendications 4 à 19 et un étrier de frein (10) associé à lui par l'intermédiaire des deuxièmes moyens de fixation (31), le dit étrier (10) étant dissocié de la structure fixe.

21. Ensemble de freinage selon la revendication 20, **caractérisé en ce qu'**il comprend en outre un disque de frein (8) associé à la bague tournante (3), inséré entre les mors (11, 12) de l'étrier (10) pour que celui-ci lui applique un effort de freinage (F) par rapprochement des mors (11, 12).

22. Application d'ensembles (7) selon la revendication 20 ou 21 à la mesure d'une part du couple de freinage d'un véhicule (4) et d'autre part des efforts longitudinaux, transversaux et verticaux exercés sur une ou chacune de ses roues, dans laquelle un ensemble est associé à une ou à chacune des roues du véhicule, le couple étant mesuré au moyen des capteurs (26) localisés au voisinage des deuxièmes moyens de fixation (31) et les efforts étant mesurés au moyen des capteurs (26) localisés au voisinage des premiers moyens de fixation (5).

23. Application selon la revendication 22, dans laquelle un dispositif de commande (37) recueille les mesures du couple de freinage et/ou des efforts exercés sur une ou chacune des roues, ce dispositif de commande (37) étant agencé pour réguler au moins une commande de contrôle dynamique du véhicule (4), notamment le freinage, l'accélération, la direction, la suspension en fonction des dites mesures.
